(19) **Europäisches Patentamt**
**European Patent Office**
**Office européen des brevets**

(11) **EP 1 469 122 B1**

(12) **EUROPEAN PATENT SPECIFICATION**

(45) Date of publication and mention
of the grant of the patent:
**26.02.2014   Bulletin 2014/09**

(51) Int Cl.:
***D21C 5/02*** (2006.01)

(21) Application number: **04005658.2**

(22) Date of filing: **10.03.2004**

(54) **Non-woody fiber mulching mat and production method thereof**

Mulchmatte aus nichtholzartigen Fasern und Herstellungsverfahren dafür

Paillis de fibres non-ligneuses, ainsi que sa méthode de fabrication

(84) Designated Contracting States:
**AT BE BG CH CY CZ DE DK EE ES FI FR GB GR HU IE IT LI LU MC NL PL PT RO SE SI SK TR**

(30) Priority: **24.03.2003   CN 03108260**

(43) Date of publication of application:
**20.10.2004   Bulletin 2004/43**

(73) Proprietor: **Yuen Foong Yu Paper MFG Company, Limited**
**Taipei,**
**Taiwan 411 (TW)**

(72) Inventors:
• **Huang, Jenn-Wen**
**Taiping City**
**Taichung**
**Taiwan 411 (CN)**

• **Peng, Yu-Hsiang**
**Linkou Shiang**
**Taipei**
**Taiwan 244 (CN)**

(74) Representative: **Isarpatent**
**Patent- und Rechtsanwälte**
**Postfach 44 01 51**
**80750 München (DE)**

(56) References cited:
| | |
|---|---|
| **EP-A2- 0 200 409** | **WO-A-89/01074** |
| **JP-A- 7 053 602** | **JP-A- 7 238 488** |
| **JP-A- 8 092 893** | **JP-A- 10 077 595** |
| **JP-A- 11 061 678** | **JP-A- 2001 226 898** |
| **KR-A- 20030 065 916** | **US-A1- 2002 096 285** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a plant fiber mulching mat, and more particularly to a non-woody fiber mulching mat and the production method thereof.

Generally, the agricultural production includes the steps of land-preparation, sowing, fertilization, hand weeding and harvesting. Each step requires a huge amount of manpower. Particularly, the step of hand weeding requires a huge amount of manpower, which always delays the organic farming for a period of time. In order to proceed the step of weed removal, the farmers conventionally cover the land with the black plastic film for preventing the weeds from growing. Although the plastic film is cheap and convenient, it is non-biodegradable. After the crops are harvested, the farmers don't know how to deal with the useless black plastic film. Besides, because the black plastic film can't be decomposed naturally, it thus results in environmental pollution once the black plastic film is discarded. However, in order to protect our environment, the usage of plastic should be limited. Thus, it is important to provide a biodegradable material for agricultural production. Therefore, a new method for satisfying the requirement of weed removal and preventing the problem of environmental pollution draws a large number of researchers' attention.

Furthermore, there are other problems in the natural environment. For example, the water and soil conservation on the mountainside land is not easy to carry out. Many countries have paid close attention to mobilizing the initiation of the people to control the soil erosion. Also, the problems of desertification and dust storm are serious because the water is greatly evapotranspirated in arid area. These problems become more and more serious and are in an urgent need to be solved.

Owing to the naturally decomposed feature of paper products, after the agricultural purpose is achieved, the paper products will be automatically returned to the nature and become organic materials in soil, thereby eliminating the drawbacks of recycling the discard or causing environmental pollution. Hence, to research and develop paper products to replace these plastic weed-proof materials are a foresighted object in the considerations of economical effect and environmental protection.

US 2002/096285 discloses a surface-sizing agent for providing a recording paper containing bacterial cellulose and/or plant-originated fine fibrous cellulose, and a cationic polymer. EP-A2-0 200 409 discloses a moulded material including bacteria-produced cellulose, which is produced by bacteria and includes ribbon-like microfibrils, and is used as a component of moulded materials having high dynamic strength as compared to conventional moulded materials. WO 89/01074 discloses a method of bonding a fibrous wet laid nonwoven fabric-like product using bacterial cellulose as a binder. JP 10 077595A discloses the paper for hygienic purpose by making paper from a mixture of unbeaten, or very slightly beaten vegetable pulp, as a main component, with swelling cellulose and a wet paper-strengthening agent. JP 07 053602A discloses modified bacterial cellulose composed of a bacterial cellulose gel containing a water-insoluble or sparingly soluble inorganic substance.

The papermaking material typically comes from the natural organic wood fibers, which are also excellent carriers for microorganisms. Therefore, if the functional components can be added and adjusted in the papermaking material during the manufacturing process of making the paper product, it can be sufficiently applied in agriculture and natural environment for solving the problems described above. However, the waste liquid is discharged from factory in the traditional chemical paper-making process. It also results in environmental pollution. Nowadays, people in the whole world pay full attention to environmental protection. The managers of paper-making industry are obligated to spend money for improving the environmental quality. The production costs are therefore raised. Those problems really strike against the paper-making industry.

Accordingly, it is known that how to develop a method for providing paper material with multiple functions has become a major problem waited to be solved. Thus, the invention has the utility for the agricultural industry.

It is therefore an object of the present invention to provide a fiber mulching mat and the production method thereof for being applied in agricultural planting and cultivating to solve the problems resulted from weed control, paper-making process, manpower costs, water and soil loss on the mountainside land, desertification and dust storm, thereby the agricultural producing is possibly becoming a permanent industry.

It is an object of the present invention to provide a liquid fiber mulching mat of a non-woody fiber and the production method thereof. The present invention utilizes a non-woody fiber plant which is decomposed by a microorganism and cooked with the cooking liquid of 1 % (w/v) CaO for preparing a fiber pulp, to produce a liquid and a solid fiber mulching mat. The present invention not only is contributive to the recycling of a non-woody fiber plant but also has the advantage of not causing any environmental pollution thereby the agricultural producing is possibly becoming a permanent industry.

In accordance with an aspect of the present invention, a production method of a liquid fiber mulching mat for a non-woody fiber is provided. The method includes steps of providing a biopulp of a non-woody fiber plant, a polymer and a water, mixing the biopulp, the polymer and the water well for preparing a liquid fiber pulp of the non-woody fiber plant, and applying the liquid fiber pulp of the non-woody fiber plant on a soil surface for forming the liquid fiber mulching mat.

Preferably, the biopulp is provided by steps of providing a culture solution with a non-woody fiber plant therein, adding a suspension of a microorganism into the culture solution, fermentatively culturing the culture solution for preparing a pulp solution, boiling the pulp solution, pulping thepulp solution, and screening the pulp solution for isolating the biopulp from the pulp solution.

Preferably, the polymer is added into the biopulp at a concentration of 2500 ppm.

Preferably, the polymer is one selected from a group consisting of an alginic acid, an alginic salt, a polyelectrolyte, a corn wheat bran and a starch.

Preferably, the corn wheat bran has a concentration ranged from 0.5 to 1.0 % (w/v).

Preferably, water is added into the biopulp by a volume of 2 ~ 10 times of the biopulp.

Preferably, the production method further includes a step of adding a seed for grass vegetation into the liquid fiber pulp.

Preferably, the seed for grass vegetation is one selected from a group consisting of a *Paspalum notatum* Flugge seed, a *Digitaria decumbens* Stent seed, a *Brachiaria mutica* (Forsk.) Stapf seed, a *Cynodon dactylon* seed and a *Stenotaphrum secvndatum* (walt) kvntze.

In accordance with another aspect of the present invention, a production method of a liquid fiber mulching mat is provided. The method includes steps of providing a biopulp of a fiber plant, a polymer and a water, mixing the biopulp, the polymer and the water well for preparing a liquid fiber pulp of the fiber plant and applying the liquid fiber pulp of the fiber plant on a soil surface for forming the liquid fiber mulching mat.

Preferably, the fiber plant is a non-woody fiber plant.

Preferably, the polymer is added into the biopulp at a concentration of 2500 ppm

Preferably, the polymer is one selected from a group consisting of an alginic acid, an alginic salt, a polyelectrolyte, a corn wheat bran and a starch.

Preferably, the corn wheat bran has a concentration ranged from 0.5 to 1.0 % (w/v).

Preferably, the water is added into the biopulp by a volume of 2 to 10 times of the biopulp.

Preferably, the production method further includes a step of adding a seed for grass vegetation into the liquid fiber pulp.

Preferably, the seed for grass vegetation is one selected from a group consisting of a *Paspalum notatum* Flugge seed, a *Digitaria decumbens* Stent seed, a *Brachiaria mutica* (Forsk.) Stapf seed, a *Cynodon dactylon* seed and a *Stenotaphrum secvndatum* (walt) kvntze.

In accordance with another aspect of the present invention, a liquid fiber mulching mat of a non-woody fiber is provided. The liquid fiber mulching mat includes a liquid fiber pulp, including a seed for grass vegetation, a biopulp of a non-woody fiber plant, a polymer and a water, wherein the liquid fiber pulp is well mixed to be applied on a surface of an article so as to form the liquid fiber mulching mat.

Preferably, the polymer is one selected from a group consisting of an alginic acid, an alginic salt, a polyelectrolyte, a corn wheat bran and a starch.

In accordance with another aspect of the present invention, a production method of a solid fiber mulching mat for a non-woody fiber is provided. The method includes steps of providing a biopulp of a non-woody fiber plant, a polymer and a water, mixing the biopulp, the polymer and water well for preparing a liquid fiber pulp of the non-woody fiber plant, spreading the liquid fiber pulp of the non-woody fiber plant, extruding and dehydrating the liquid fiber pulp, drying the liquid fiber pulp so as to form the solid fiber mulching mat, and paving the solid fiber mulching mat on a soil surface.

Preferably, the polymer is added into the biopulp at a concentration of 2500 ppm.

Preferably, the polymer is one selected from a group consisting of an alginic acid, an alginic salt, a polyelectrolyte, a corn wheat bran and a starch.

Preferably, the corn wheat bran has a concentration ranged from 0.5 to 1.0 % (w/v).

The above objects and advantages of the present invention will become more readily apparent to those ordinarily skilled in the art after reviewing the following detailed descriptions and accompanying drawings, in which:

Fig. 1 shows the ability of various strains to decompose the rice straw of Japonica rice; and

Fig.2 is a profile of according to a preferred embodiment of the present invention.

The present invention will now be described more specifically with reference to the following embodiments. The present invention relates to a fiber mulching mat and the production method thereof, and more particularly, to a fiber mulching mat of a non-woody fiber and the production method thereof. The detailed steps of the production method are described as follows.

1. The steps for producing a biopulp fiber:

(1) The rice straws are cut into small fragments having the length of 2-3 cm.

The waste rice straws of an Indica rice (*Oryza sativa* L. subsp. indica) and Japonica rice are provided. The variety of the Indica rice is Taichung Sheng No. 10 and that of the Japonica rice is Tai Keng No. 9. The rice straws are sun-dried, cut into small segments of 2-3 cm length.

(2) The selection of bacterial strains having decomposition ability:

The microorganism strains are obtained by the following method according to a preferred embodiment. First, 10 g of the rice straws and 10 g of livestock excrements are prepared and added into 90 ml of sterile water containing agar (0.1 %, w/v). The materials are well mixed and a serious dilution is made. Then, 0.1 ml of $10^3$ X and $10^4$ X diluted solution are uniformly spread on Nutrient Agar plate, pH 8 (NA, purchased Nutrient Agar from Difco company) and Potato Dextrose Agar plate, pH 8 (PDA, purchased Potato Dextrose Agar from Difco company) respectively. Next, the plates are placed in the incubators under 30 °C and 50 °C for 24 hours and 48 hours respectively. Single colonies grown on plates are picked and isolated for obtaining the microorganism strains. The number of microorganisms isolated from the rice straws and the livestock excrements having the decomposition ability is more than 200 strains. Finally, the microorganisms are identified by the Gram stain. It is found that most of the microorganisms are Gram-positive bacteria.

The isolated microorganisms are further selected by the following steps for selecting the microorganism strains having the decomposition ability for rice straws. (a) 19 strains of the isolated strains, named PMBP-m1, PMBP-m2, PMBP-m3, PMBP-m4, PMBP-m5, PMBP-m6, PMBP-m7, PMBP-O1, PMBP-O2, PMBP-O3, PMBP-O4, PMBP-e1, PMBP-e2, PMBP-e3, PMBP-e4, PMBP-H1, PMBP-H2, PMBP-H3 and PMBP-H4 (as shown in Table 1), are divided into 9 strains groups, including PMBP-I, PMBP-II, PMBP-III, PMBP-IV, PMBP-V, PMBP-VI, PMBP-O, PMBP-E and PMBP-H. Please refer to Table 1, which shows the bacterial strains of different strain groups and the characteristics thereof. (b) The strains groups are cultured with NA plates respectively and then a suspension of microorganism is prepared at the concentration of $10^8$ cfu/ml. (c) 100 ml of solution containing rice straws of Japonica rice (5%, w/v) is prepared. (d) 1 ml of the microorganism suspension is added into the sterile solution prepared in step (c) and then cultured under 50 °C and 200 rpm shaking for a week. Each strain is set up in duplicate. (f) The decomposition percentage of rice straws is calculated.

(3) The LBY (Lactose Beef extract Yeast extract) culture media containing $10^6$ cfu/ml PMBPIII bacterium strains [including *Bacillus licheniformis* (PMBP-m5), *B. subtilis* (PMBP-m6) and *B. amyloloquefaciens* (PMBP-m7) respectively] are provided. The formula of the LBY medium consists of 0.25 % (w/v) lactose, 0.2 % (w/v) beef extract and 0.05 % (w/v) Yeast extract.

## Table 1

| Characteristics / Isolate | Temp. 50 $^0$C | pH8 | Gram stain (+/-) |
|---|---|---|---|
| PMBP-m1 | ++ | + | + |
| PMBP-m2 | ++ | + | + |
| PMBP-m3 | ++ | + | + |
| PMBP-m4 | ++ | + | + |
| PMBP-m5 | ++ | + | + |
| PMBP-m6 | ++ | + | + |
| PMBP-m7 | ++ | + | + |
| PMBP-O1 | ++ | + | + |
| PMBP-O2 | ++ | + | + |
| PMBP-O3 | ++ | + | + |
| PMBP-O4 | ++ | + | + |
| PMBP-e1 | ++ | + | + |

| PMBP-e2 | ++ | + | + |
|---|---|---|---|
| PMBP-e3 | ++ | + | + |
| PMBP-e4 | ++ | + | + |
| PMBP-H1 | ++ | + | + |
| PMBP-H2 | ++ | + | + |
| PMBP-H3 | ++ | + | + |
| PMBP-H4 | ++ | + | + |

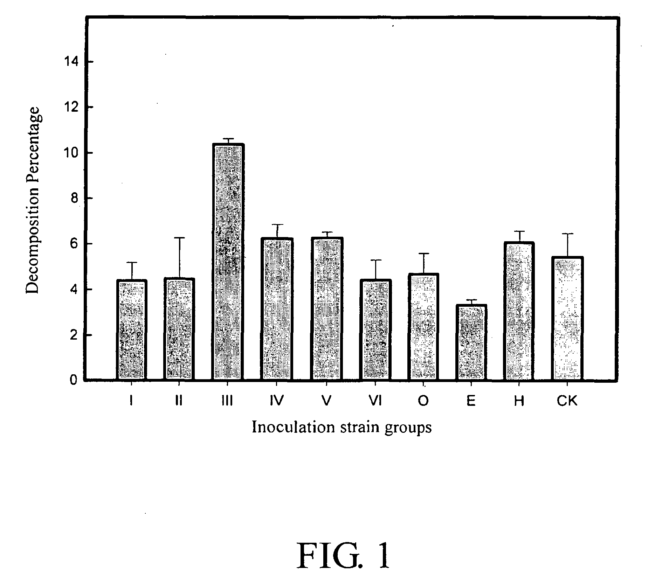

Please refer to Fig. 1, which shows the ability of various strains to decompose the rice straw of Japonica Rice. The Japonica rice straws treated with shaking culturing for a week are classified, dried and weighted. The decomposition percentage of rice straws treated with different microorganisms is calculated by the following formula.

$$\text{Decomposition \%} = \frac{(\text{Total dry weight of fermentative rice straws} - \text{Dry weight of intact rice straws})}{(\text{Total dry weight of fermentative rice straws})} \times 100$$

As shown in Fig. 1, the PMBIII strain group has the best decomposition ability than the others. The decomposition percentage of rice straws is about 10.38 %. The PMBIII consists of *Bacillus licheniformis* (PMBP-m5), *B. subtilis* (PMBP-m6) and *B. amyloloquefaciens* (PMBP-m7).

(4) The rice straws are added into the LBY medium containing $10^6$ cfu/ml PMBPIII bacterium strain at a concentration of 0.05 % (w/v). All the materials described above are put into a flask.

(5) The flask is fermentatively cultured at 50°C and shaked at 200 rpm for 4 days.

(6) After the fermentation culturing, carbon oxide (CaO) is added into the fermentative culture solution and then the solution is boiled under 140°C for 30 min for forming a biopulp solution.

(7) The biopulp solution is screened by sieves with 18, 200 and 270 meshes respectively for producing the biopulp fiber solution.

2. The production and utilization of the liquid fiber mulching mat of waste rice straws are described as follows.

(1) The production of the liquid fiber pulp:

The alginic salt (a kind of polymer) is added into the biopulp fiber solution of waste rice straws at the concentration of 2500 ppm. Water is added into the biopulp fiber solution by the volume of five times of the biopulp. The biopulp fiber solution, the alginic salt and water are mixed well for forming a liquid fiber pulp. The other kinds of polymer can be used, for example, alginic acid and polyelectrolytes, etc. Also, the corn wheat bran or starch can be used to replace the polymer at a concentration ranged from 0.5-1.0 % (w/v). Also, the quantity of water added into the biopulp fiber solution can be a volume of 2 to 10 times of the biopulp fiber solution.

(2) The utilization of the liquid fiber mulching mat of waste rice straws on the mountainside land for water and soil conservation.

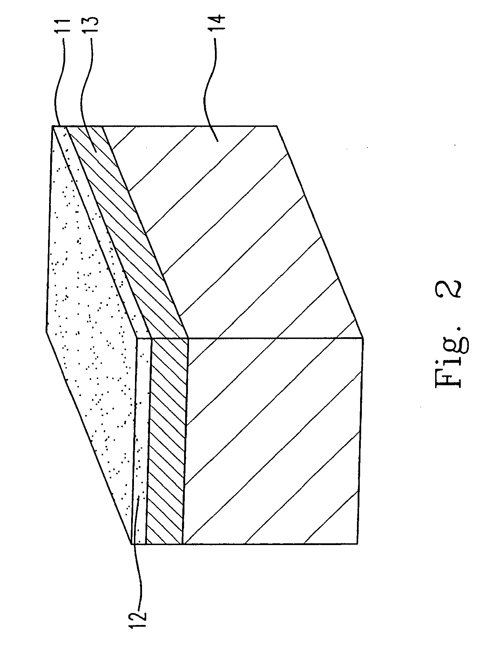

The Para grass seeds for grass vegetation are added into the liquid fiber pulp. The seeds for grass vegetation can be other species such as the Bahiagrass [*Paspalum notatum* Flugge], the Pangola grass [*Digitaria decumbens* Stent], the Para grass [*Brachiaria mutica* (Forsk.) Stapf], Bermuda grass [*Cynodon dactylon*] and the Augustine grass [*Stenotaphrum secvndatum* (*walt*) kvntze.], etc. The seeds are mixed with the liquid fiber pulp well to form a well-mixed liquid fiber pulp containing the seeds for grass vegetation. And then the mixed liquid fiber pulp containing the seeds for grass vegetation is sprayed on the soil surface of the mountainside land. Please refer to Fig. 2, which is a soil profile according to the preferred embodiment of the present invention. The soil profile shown in Fig. 2 includes the liquid mulching mat 11, the topsoil 13 and the rock stratum 14, wherein the seeds 12 for grass vegetation are well distributed in the liquid mulching mat 11. One to two weeks later, the fiber mulching mat will be formed on the soil surface. If the liquid fiber pulp containing the seeds for grass vegetation is used in mountainside land, the seeds will germinate after a period of time. This will be helpful to the maintenance of the trees and vegetative cover for preventing soil collapse. So, the water and soil conservation is achieved.

(3) The utilization of the liquid fiber mulching mat of waste rice straws in the arid area for preventing desertification and dust storm:

The starch powder is added into the biopulp fiber solution of waste rice straws at the concentration of 0.6 % (w/v) according to a preferred embodiment of the present invention. Water is added into the biopulp fiber solution by the volume of ten times of the biopulp fiber solution. The biopulp fiber solution, the alginic salt and water are mixed well for forming a liquid fiber pulp. And then the mixed substrate of the liquid fiber mulching mat containing the seeds for grass vegetation is directly applied on the soil surface of a desert or a arid area to form a liquid fiber mulching mat. One or two weeks later, the liquid fiber mulching mat will dry and the fiber mulching mat will be formed on the soil surface. By means of the fiber mulching mat, it can decrease the water evaporation and prevent desertification and dust storm.

(4) The utilization of the liquid fiber mulching mat of waste rice straws in the agricultural cultivation for preventing weeds:

According to a preferred embodiment of the present invention, the corn wheat bran is added into the biopulp fiber solution at a concentration of 0.7 % (w/v). The water is added into the biopulp fiber solution by a volume of 10 times of the biopulp fiber solution and then the materials are mixed well. The mixed liquid fiber pulp is sprayed uniformly on the soil surface of a farm. After one to two weeks the fiber mulching mat is formed on the soil surface. The weed seeds in the soil do not germinate because the sunlight is isolated from the soil by the fiber mulching mat. Therefore, the weed control is achieved. The fiber mulching mat having the property of air-permeability will not result in poor water-permeability and air-permeability or influence the ecological environment of soil microorganisms, root system of cultivated seedling, and the growth of crops. The fiber mulching mat is excellent carriers for microorganisms. After achieving the purpose of agricultural producing, the fiber mulching mat has the advantage of being decomposable in natural environment easily to be the organic matters of the soil and does not result in pollution.

In the extensive-cultivation area, the crop seeds are widely seeded. The crop seeds can be mixed with the liquid fiber pulp. And then the liquid fiber pulp containing crop seeds is applied on the farm surface. Therefore, the seeding and the weed prevention are accomplished at the same time. This not only mitigates the painstaking of the farmer but also increases the work efficiency. Nowadays, the production costs of agriculture increase with time. The present invention provides a way to decrease the production costs.

The liquid fiber mulching mat of waste rice straws can be applied to the large area field, the farm site, the home garden, the golf course, the three-dimensional cultivating box containing organic soil and medium, the indoor planting system with light-control and temperature-control apparatus, and the organic farming for planting various crops according to a preferred embodiment. The liquid fiber mulching mat is directly sprayed on the soil surface after a polymer being added into the biopulp fiber solution. The work of spraying the liquid fiber mulching mat on a large field can be proceeded by using a motorised sprayer. This is not only rapid but also convenient to apply the liquid fiber pulp in a large area. If the liquid fiber pulp is applied in a small area, such as a small farm and garden, a spraying apparatus for spraying insecticide or a household sprayer can be used to spray the liquid fiber pulp on the soil surface for forming the liquid fiber mulching mat. Thus, the liquid fiber mulching mat of waste straws of the present invention is a convenient and effective invention.

(5) The production and utilization of the solid fiber mulching mat of waste rice straws in the agricultural cultivation for preventing weeds:

The biopulp fiber solution of waste rice straws can be used to produce a solid fiber mulching mat by a paper producing process. The steps of producing a solid fiber mulching mat are described as follows. First, the biopulp fiber solution of waste rice straws is spread to form a thin layer. Second, the spread thin-layer fiber pulp is extruded and dehydrated. Third, a drying process is proceeded for forming the solid mulching mat.

The solid fiber mulching mat of waste rice straws can be rolled up, and cut into a specific shape in use. The solid fiber mulching mats of waste rice straws can be used in a rice paddy. After soil preparation of the paddy field, the steps are as follows. (1) The solid fiber mulching mat of waste rice straws is cut into a square of 1.5 m x 1.5 m. (2) The solid fiber mulching mat of waste rice straws is cut by razor blade to form cultivation holes. (3) The solid fiber mulching mat of waste rice straws is evenly paved on the soil and the rice seedlings are transplanted in the cultivation holes. The paving of the paper mat can be performed manually or by machine, but it is to be noted that the field water should be lessened as little as possible to render the junction between the soil and solid fiber mulching mat of waste rice straws hermetic so as to prevent the formation of gaps and thus the solid fiber mulching mat of waste rice straws will not be easily turned up or worn out. As using the solid fiber mulching mat of waste rice straws, it should be noted that the surface of soil have to be kept even in order to avoid forming a hollow beneath the solid fiber mulching mat of waste rice straws or forming bubbles, which might ruin the solid fiber mulching mat of waste rice straws. It is easy to achieve the prevention of weeds while transplanting the seedlings in the cultivation holes having proper planting distance therebetween. Using a solid fiber mulching mat of waste rice straws in a paddy field can isolate the surface of the soil from being exposed directly under the sunshine, thereby the growth of weed germinating is restrained and the purpose of weed prevention is achieved. Because the solid fiber mulching mat of waste rice straws is easy to be naturally decomposed in natural environment, the mat is completely decomposed into tiny fiber to be mixed with the soil and no more paper pieces are suspended in the field while harvesting. Moreover, the following agricultural activity will not be affected and the secondary pollution will not occur.

As described above, the purposes of the present invention can be generalized as follows: (1) In agricultural cultivation, the fiber mulching mat can be used to prevent the weeds. (2) In mountainside land, the fiber mulching mat can be used to aid the maintenance of the trees and vegetative cover for preventing soil collapse. (3) In arid area, the fiber mulching mat can be used to decrease water evaporation and prevent desertification and dust storm.

The bacterial strains described in the present application were deposited with ATCC and have received the following ATCC accession numbers:

Bacillus licheniformis (PMBP-M5)
ATCC Number: PTA-5824
Date of Deposit: February 18, 2004

Bacillus subtilis (PMBP-M6)
ATCC Number: PTA-5818
Date of Deposit: February 13, 2004

Bacillus amyloliquefaciens (PMBP-M7)
ATCC Number: PTA-5819
Date of Deposit: February 13, 2004

**Claims**

1. A production method of a liquid fiber mulching mat (11) for a non-woody fiber, **characterized in that**:

    (a) providing a biopulp of a non-woody fiber plant, a polymer and a water;
    (b) mixing the biopulp, the polymer and the water well for preparing a liquid fiber pulp of the non-woody fiber plant; and
    (c) applying the liquid fiber pulp of the non-woody fiber plant on a soil surface for forming the liquid fiber mulching mat (11).

2. The production method as claimed in claim 1, **characterized in that** the biopulp is provided by steps of:

    (a) providing a culture solution with a non-woody fiber plant therein;
    (b) adding a suspension of a microorganism into the culture solution;
    (c) fermentatively culturing the culture solution for preparing a pulp solution;
    (d) boiling the pulp solution;
    (e) pulping the pulp solution; and

(f) screening the pulp solution for isolating the biopulp from the pulp solution.

3. The production method as claimed in claim 1 or 2, **characterized in that** the polymer is added into the biopulp at a concentration of 2500 ppm.

4. The production method as claimed in one of the preceding claims, **characterized in that** the polymer is one selected from a group consisting of an alginic acid, an alginic salt, a polyelectrolyte, a corn wheat bran and a starch.

5. The production method as claimed in one of the preceding claims, **characterized in that** the corn wheat bran has a concentration ranged from 0.5 to 1.0 % (w/v).

6. The production method as claimed in one of the preceding claims, **characterized in that** the water is added into the biopulp by a volume of 2 ~ 10 times of the biopulp.

7. The production method as claimed in one of the preceding claims **characterized by** comprising a step of adding a seed for grass vegetation (12) into the liquid fiber pulp.

8. The production method as claimed in one of the preceding claims, **characterized in that** the seed for grass vegetation (12) is one selected from a group consisting of a *Paspalum notatum* Flugge seed, a *Digitaria decumbens* Stent seed, a *Brachiaria mutica* (Forsk.) Stapf seed, a *Cynodon dactylon* seed and a *Stenotaphrum secvndatum* (walt) kvntze.

9. A production method of a liquid fiber mulching mat (11), **characterized in that**:

 (a) providing a biopulp of a fiber plant, a polymer and a water;
 (b) mixing the biopulp, the polymer and the water well for preparing a liquid fiber pulp of the fiber plant; and
 (c) applying the liquid fiber pulp of the fiber plant on a soil surface for forming the liquid fiber mulching mat (11).

10. The production method as claimed in claim 9, **characterized in that** the fiber plant is a non-woody fiber plant.

11. The production method as claimed in claim 9 or 10, **characterized in that** the polymer is added into the biopulp at a concentration of 2500 ppm.

12. The production method as claimed in one of the claims 9-11, **characterized in that** the polymer is one selected from a group consisting of an alginic acid, an alginic salt, a polyelectrolyte, a corn wheat bran and a starch.

13. The production method as claimed in one of the claims 9-12, **characterized in that** the corn wheat bran has a concentration ranged from 0.5 to 1.0 % (w/v).

14. The production method as claimed in one of the claims 9-13, **characterized in that** the water is added into the biopulp by a volume of 2 to 10 times of the biopulp.

15. The production method as claimed in one of the claims 9-14 **characterized by** comprising a step of adding a seed for grass vegetation (12) into the liquid fiber pulp.

16. The production method as claimed in one of the claims 9-15, **characterized in that** the seed for grass vegetation (12) is one selected from a group consisting of a *Paspalum notatum* Flugge seed, a *Digitaria decumbens* Stent seed, a *Brachiaria mutica* (Forsk.) Stapf seed, a *Cynodon dactylon* seed and a *Stenotaphrum secvndatum* (walt) kvntze.

17. A liquid fiber mulching mat (11) of a non-woody fiber, comprising:

 a liquid fiber pulp, comprising:

  a seed for grass vegetation (12);
  a biopulp of a non-woody fiber plant;
  a polymer; and
  a water,

wherein the liquid fiber pulp is well mixed to be applied on a surface of an article so as to form the liquid fiber mulching mat (11).

18. The liquid fiber mulching mat (11) as claimed in claim 17, **characterized in that** the polymer is one selected from a group consisting of an alginic acid, an alginic salt, a polyelectrolyte, a corn wheat bran and a starch.

19. A production method of a solid fiber mulching mat for a non-woody fiber, **characterized in that**:

   (a) providing a biopulp of a non-woody fiber plant, a polymer and a water;
   (b) mixing the biopulp, the polymer and the water well for preparing a liquid fiber pulp of the non-woody fiber plant;
   (c) spreading the liquid fiber pulp of the non-woody fiber plant;
   (d) extruding and dehydrating the liquid fiber pulp;
   (e) drying the liquid fiber pulp so as to form the solid fiber mulching mat; and
   (f) paving the solid fiber mulching mat on a soil surface.

20. The production method as claimed in claim 19, **characterized in that** the polymer is added into the biopulp at a concentration of 2500 ppm.

21. The production method as claimed in claim 19 or 20, **characterized in that** the polymer is one selected from a group consisting of an alginic acid, an alginic salt, a polyelectrolyte, a corn wheat bran and a starch.

22. The production method as claimed in one of the claims 19-21, **characterized in that** the corn wheat bran has a concentration ranged from 0.5 to 1.0 % (w/v).

**Patentansprüche**

1. Verfahren zum Herstellen einer Flüssigfaser-Mulchmatte (11) für eine nicht-holzartige Faser, **gekennzeichnet durch**:

   (a) Bereitstellen eines biologischen Breis aus einer Pflanze aus nicht-holzartigen Fasern, einem Polymer und Wasser;
   (b) gründliches Vermischen des biologischen Breis, des Polymers und des Wasser zur Herstellung eines Flüssigfaserbreis aus der Pflanze aus nicht-holzartigen Fasern; und
   (c) Auftragen des Flüssigfaserbreis aus der Pflanze aus nicht-holzartigen Fasern auf eine Bodenfläche zum Ausbilden der Flüssigfaser-Mulchmatte (11).

2. Herstellungsverfahren nach Anspruch 1, **dadurch gekennzeichnet, dass** der biologische Brei durch folgende Schritte bereitgestellt wird:

   (a) Bereitstellen einer Kulturlösung mit einer Pflanze aus nicht-holzartigen Fasern darin;
   (b) Zugeben einer Suspension aus einem Mikroorganismus zu der Kulturlösung;
   (c) fermentatives Kultivieren der Kulturlösung zum Herstellen einer Breilösung;
   (d) Kochen der Breilösung;
   (e) Aufschließen der Breilösung; und
   (f) Sieden der Breilösung zum Trennen des biologischen Breis von der Breilösung.

3. Produktionsverfahren nach Anspruch 1 oder 2, **dadurch gekennzeichnet, dass** das Polymer mit einer Konzentration von 2500 ppm zu dem biologischen Brei hinzugegeben wird.

4. Herstellungsverfahren nach einem der vorangehenden Ansprüche, **dadurch gekennzeichnet, dass** das Polymer eines aus folgender Gruppe ist: eine Alginsäure, ein Alginsalz, ein Polyelektrolyt, ein Mais-Weizen-Kleie und eine Stärke.

5. Herstellungsverfahren nach einem der vorangehenden Ansprüche, **dadurch gekennzeichnet, dass** die Mais-Weizen-Kleie eine Konzentration im Bereich von 0,5 bis 1,0 Gewicht/Volumen-% aufweist.

6. Herstellungsverfahren nach einem der vorangehenden Ansprüche, **dadurch gekennzeichnet, dass** das Wasser mit einem Volumen des 2- bis 10-fachen des biologischen Breis zu dem biologischen Brei zugegeben wird.

7. Herstellungsverfahren nach einem der vorangehenden Ansprüche, **dadurch gekennzeichnet, dass** es einen Schritt des Zugebens eines Samens für Grasvegetation (12) zu dem Flüssigfaserbrei umfasst.

8. Herstellungsverfahren nach einem der vorangehenden Ansprüche, **dadurch gekennzeichnet, dass** der Samen für Grasvegetation (12) einer aus folgender Gruppe ist: ein *Paspalum notatum* Flugge-Samen, ein *Digitaria decumbens*-Stent-Samen, ein *Brachiaria mutica* (Forsk.)-Stapf-Samen, ein *Cynodon dactylon*-Samen und ein *Stenotaphrum secvndatum* (Walt) kvntze-Samen.

9. Verfahren zum Herstellen einer Flüssigfaser-Mulchmatte (11), **gekennzeichnet durch**:

(a) Bereitstellen eines biologischen Breis aus einer faserhaltigen Pflanze, einem Polymer und Wasser;
(b) gründliches Vermischen des biologischen Breis, des Polymers und des Wassers zum Herstellen eines Flüssigfaserbreis aus der faserhaltigen Pflanze; und
(c) Auftragen des Flüssigfaserbreis aus der faserhaltigen Pflanze auf eine Bodenfläche zum Ausbilden der Flüssigfaser-Mulchmatte (11).

10. Herstellungsverfahren nach Anspruch 9, **dadurch gekennzeichnet, dass** die faserhaltige Pflanze eine Pflanze aus nicht-holzartigen Fasern ist.

11. Herstellungsverfahren nach Anspruch 9 oder 10, **dadurch gekennzeichnet, dass** das Polymer zu dem biologischen Brei mit einer Konzentration von 2500 ppm zugegeben wird.

12. Herstellungsverfahren nach einem der Ansprüche 9-11, **dadurch gekennzeichnet, dass** das Polymer eines aus folgender Gruppe ist: eine Alginsäure, ein Alginsalz, ein Polyelektrolyt, ein Mais-Weizen-Kleie und eine Stärke.

13. Herstellungsverfahren nach einem der Ansprüche 9-12, **dadurch gekennzeichnet, dass** die Mais-Weizen-Kleie eine Konzentration im Bereich von 0,5 bis 1,0 Gewicht/Volumen-% aufweist.

14. Herstellungsverfahren nach einem der Ansprüche 9-13, **dadurch gekennzeichnet, dass** das Wasser mit einem Volumen des 2- bis 10-Fachen des biologischen Breis zu dem biologischen Brei zugegeben wird.

15. Herstellungsverfahren nach einem der Ansprüche 9-14, **dadurch gekennzeichnet, dass** es einen Schritt des Zugebens eines Samens für Grasvegetation (12) zu dem Flüssigfaserbrei umfasst.

16. Herstellungsverfahren nach einem der Ansprüche 9-15, **dadurch gekennzeichnet, dass** der Samen für Grasvegetation (12) einer aus folgender Gruppe ist: ein *Paspalum notatum* Flugge-Samen, ein *Digitaria decumbens*-Stent-Samen, ein *Brachiaria mutica* (Forsk.)-Stapf-Samen, ein *Cynodon dactylon*-Samen und ein *Stenotaphrum secvndatum* (Walt) kvntze-Samen.

17. Flüssigfaser-Mulchmatte (11) aus einer nicht-holzartigen Faser, die Folgendes enthält:

- einen Flüssigfaserbrei, der Folgendes enthält:

• einen Samen für Grasvegetation (12);
• einen biologischen Brei aus einer Pflanze aus nicht-holzartigen Fasern;
• ein Polymer; und
• Wasser,

wobei der Flüssigfaserbrei gründlich vermischt wird, um auf eine Fläche eines Erzeugnisses aufgebracht zu werden, so dass eine Flüssigfaser-Mulchmatte (11) entsteht.

18. Flüssigfaser-Mulchmatte (11) nach Anspruch 17, **dadurch gekennzeichnet, dass** das Polymer eines aus folgender Gruppe ist: eine Alginsäure, ein Alginsalz, ein Polyelektrolyt, eine Mais-Weizen-Kleie und eine Stärke.

19. Verfahren zum Herstellen einer Festfaser-Mulchmatte für eine nicht-holzartige Faser, **gekennzeichnet durch**:

(a) Bereitstellen eines biologischen Breis aus einer Pflanze aus nicht-holzartigen Fasern, einem Polymer und Wasser;
(b) gründliches Vermischen des biologischen Breis, des Polymers und des Wassers zum Herstellen eines Flüssigfaserbreis aus der Pflanze aus nicht-holzartigen Fasern;
(c) Ausbreiten des Flüssigfaserbreis aus der Pflanze aus nicht-holzartigen Fasern;
(d) Extrudieren und Dehydrieren des Flüssigfaserbreis;
(e) Trocknen des Flüssigfaserbreis, um die Festfaser-Mulchmatte zu bilden; und
(f) Auslegen der Festfaser-Mulchmatte auf einer Bodenfläche.

**20.** Herstellungsverfahren nach Anspruch 19, **dadurch gekennzeichnet, dass** das Polymer mit einer Konzentration von 2500 ppm zu dem biologischen Brei zugegeben wird.

**21.** Herstellungsverfahren nach Anspruch 19 oder 20, **dadurch gekennzeichnet, dass** das Polymer eines aus folgender Gruppe ist: eine Alginsäure, ein Alginsalz, ein Polyelektrolyt, eine Mais-Weizen-Kleie und eine Stärke.

**22.** Herstellungsverfahren nach einem der Ansprüche 19-21, **dadurch gekennzeichnet, dass** die Mais-Weizen-Kleie eine Konzentration im Bereich von 0,5 bis 1,0 Gewicht/Volumen-% aufweist.

## Revendications

**1.** Procédé de production d'un paillis fibreux liquide (11) pour une fibre non-ligneuse, **caractérisé par** les étapes consistant à :

(a) fournir une pâte biologique d'une plante à fibres non-ligneuses, d'un polymère et d'eau ;
(b) bien mélanger la pâte biologique, le polymère et l'eau pour préparer une pâte fibreuse liquide de la plante à fibres non-ligneuses ; et
(c) appliquer la pâte fibreuse liquide de la plante à fibres non-ligneuses sur une surface du sol pour former le paillis fibreux liquide (11).

**2.** Procédé de production selon la revendication 1, **caractérisé en ce que** la pâte biologique est fournie par les étapes consistant à :

(a) fournir une solution de culture comprenant une plante à fibres non-ligneuses ;
(b) ajouter une suspension d'un micro-organisme dans la solution de culture ;
(c) cultiver fermentativement la solution de culture pour préparer une solution pâteuse ;
(d) faire cuire la solution pâteuse ;
(e) réduire en pâte la solution pâteuse ; et
(f) tamiser la solution pâteuse pour isoler la pâte biologique de la solution pâteuse.

**3.** Procédé de production selon la revendication 1 ou 2, **caractérisé en ce que** le polymère est ajouté dans la pâte biologique à une concentration de 2 500 ppm.

**4.** Procédé de production selon l'une des revendications précédentes, **caractérisé en ce que** le polymère est choisi parmi un groupe composé d'un acide alginique, d'un sel d'acide alginique, d'un polyélectrolyte, d'un son de maïs et de blé et d'un amidon.

**5.** Procédé de production selon l'une des revendications précédentes, **caractérisé en ce que** le son de maïs et de blé a une concentration comprise dans la plage de 0,5 à 1,0 % (p/v).

**6.** Procédé de production selon l'une des revendications précédentes, **caractérisé en ce que** l'eau est ajoutée dans la pâte biologique selon un volume de 2 à 10 fois celui de la pâte biologique.

**7.** Procédé de production selon l'une des revendications précédentes, **caractérisé en ce qu'**il comprend une étape consistant à ajouter une semence pour végétation d'herbes (12) dans la pâte fibreuse liquide.

**8.** Procédé de production selon l'une des revendications précédentes, **caractérisé en ce que** la semence pour végétation d'herbes (12) est choisie parmi un groupe composé d'une semence de *Paspalum notatum* Flugge, une semence de *Digitaria decumbens* Stent, une semence de *Brachiaria mutica* (Forsk.) Stapf, une semence de *Cynodon dactylon* et une semence de *Stenotaphrum secvndatum* (walt) kvntze.

9. Procédé de production d'un paillis fibreux liquide (11), **caractérisé par** les étapes consistant à :

   (a) fournir une pâte biologique d'une plante à fibres, d'un polymère et d'eau ;
   (b) bien mélanger la pâte biologique, le polymère et l'eau pour préparer une pâte fibreuse liquide de la plante à fibres ; et
   (c) appliquer la pâte fibreuse liquide de la plante à fibres sur une surface du sol pour former le paillis fibreux liquide (11).

10. Procédé de production selon la revendication 9, **caractérisé en ce que** la plante à fibres est une plante à fibres non-ligneuses.

11. Procédé de production selon la revendication 9 ou 10, **caractérisé en ce que** le polymère est ajouté dans la pâte biologique à une concentration de 2 500 ppm.

12. Procédé de production selon l'une des revendications 9 à 11, **caractérisé en ce que** le polymère est choisi parmi un groupe composé d'un acide alginique, d'un sel d'acide alginique, d'un polyélectrolyte, d'un son de maïs et de blé et d'un amidon.

13. Procédé de production selon l'une des revendications 9 à 12, **caractérisé en ce que** le son de maïs et de blé a une concentration comprise dans la plage de 0,5 à 1,0 % (p/v).

14. Procédé de production selon l'une des revendications 9 à 13, **caractérisé en ce que** l'eau est ajoutée dans la pâte biologique selon un volume de 2 à 10 fois celui de la pâte biologique.

15. Procédé de production selon l'une des revendications 9 à 14, **caractérisé en ce qu'**il comprend une étape consistant à ajouter une semence pour végétation d'herbes (12) dans la pâte fibreuse liquide.

16. Procédé de production selon l'une des revendications 9 à 15, **caractérisé en ce que** la semence pour végétation d'herbes (12) est choisie parmi un groupe composé d'une semence de *Paspalum notatum* Flugge, une semence de *Digitaria decumbens* Stent, une semence de *Brachiaria mutica* (Forsk.) Stapf, une semence de *Cynodon dactylon* et une semence de *Stenotaphrum secvndatum* (walt) kvntze.

17. Paillis fibreux liquide (11) d'une fibre non-ligneuse, comprenant :

   une pâte fibreuse liquide, comprenant :

   • une semence pour végétation d'herbes (12) ;
   • une pâte biologique d'une plante à fibres non-ligneuses ;
   • un polymère ; et
   • de l'eau,

   dans lequel la pâte fibreuse liquide est bien mélangée pour être appliquée sur une surface d'un article de manière à former le paillis fibreux liquide (11).

18. Paillis fibreux liquide (11) selon la revendication 17, **caractérisé en ce que** le polymère est choisi parmi un groupe composé d'un acide alginique, d'un sel d'acide alginique, d'un polyélectrolyte, d'un son de maïs et de blé et d'un amidon.

19. Procédé de production d'un paillis fibreux solide pour une fibre non-ligneuse, **caractérisé par** les étapes consistant à :

   (a) fournir une pâte biologique d'une plante à fibres non-ligneuses, d'un polymère et d'eau ;
   (b) bien mélanger la pâte biologique, le polymère et l'eau pour préparer une pâte fibreuse liquide de la plante à fibres non-ligneuses ;
   (c) épandre la pâte fibreuse liquide de la plante à fibres non-ligneuses ;
   (d) extruder et déshydrater la pâte fibreuse liquide ;

(e) sécher la pâte fibreuse liquide de manière à former le paillis fibreux solide ; et

(f) recouvrir une surface du sol avec le paillis fibreux solide.

20. Procédé de production selon la revendication 19, **caractérisé en ce que** le polymère est ajouté dans la pâte biologique à une concentration de 2 500 ppm.

21. Procédé de production selon la revendication 19 ou 20, **caractérisé en ce que** le polymère est choisi parmi un groupe composé d'un acide alginique, d'un sel d'acide alginique, d'un polyélectrolyte, d'un son de maïs et de blé et d'un amidon.

22. Procédé de production selon l'une des revendications 19 à 21, **caractérisé en ce que** le son de maïs et de blé a une concentration comprise dans la plage de 0,5 à 1,0 % (p/v).

FIG. 1

EP 1 469 122 B1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002096285 A
- EP 0200409 A2
- WO 8901074 A
- JP 10077595 A
- JP 7053602 A